# EUROPEAN PATENT APPLICATION

(11) **EP 2 050 346 A1**
(43) Date of publication of application: **22.04.2009**
(21) Application number: 08018104.3
(22) Date of filing: 16.10.2008
(51) Int. Cl.: A23N 4/12, A23P 1/08, A47J 25/00

(54) **A device for treating a fruit (banana)**

(30) Priority: 17.10.2007 AR M070104593 U
(71) Applicant: Berger, Sebastian, 1199 Buenos Aires (AR)
(72) Inventor: Berger, Sebastian, 1199 Buenos Aires (AR)
(74) Representative: PROPI, S.L.

(57) **Abstract**

The application relates to a device for drilling longitudinally a fruit (banana) for its subsequent filling, which comprises a part as a header (1) from whose upper face a cylindrical part is projected, such header being vertically perforated by a cylindrical upper part (3) and a lower cylindrical/conical part (4), and from the internal face of such header and from diametrically opposite areas respective arms (5) in parallel extend in longitudinal laterally opposite edges arched sections (5b) defining such perforation a connection for a tubular rod (6) with a spindle-shaped edge and an inner wing (7), which is fixed to a perforated part and arched so as to form a handle (8), having each arm part (5) of the device in their lower ends (5a) surfaces arched outwards that define means for fitting in and support in a pair of arched diametrically opposite grooves (9a) in a cylindrical part forming the base (9) and concentric to a central blind cylindrical cavity.

## Description

### TECHNICAL FIELD OF THE UTILITY MODEL

This utility model relates to a device for treating a fruit (banana) for its subsequent filling.

It is the main object of the present invention to form a longitudinally extending blind cavity within said banana by means of a device with specific characteristics.

Another object is to position said banana within said device without previously peeling it and by introducing a tubular rod, drill it and then remove the remainder banana pulp without affecting its external shape.

A further object is to remove said tubular rod and by means of the obstruction in the upper opening and together with the little notch at the internal wall of said rod and adjacent to the lower end, section the remainder in a compact way to permit, once this operation is complete, to inject into such blind cavity a food product.

### BACKGROUND OF THE INVENTION

Concerning the edible part and more specifically relating to a fruit such as the banana, it is usual for the consumer to mix it with a food product such as chocolate, cream, toffee caramel, honey, etc. before eating it, what entails peeling the fruit, cutting it or not, and/or smashing it, steps that must be done using cutlery and a dish or a similar object.

Another way of eating a banana is by covering it, after it is peeled, with chocolate. These cases are not very frequent since, although they add different flavours to the product, some special devices or apparatus similar to those used to cover ice-creams with chocolate shall be used.

### SUMMARY OF THE NOVELTY OF THE UTILITY MODEL

To obtain a device to form a longitudinally extending cavity within a banana that comprises two identical parallel arms separated by 2.5 cm. in its rear side and 4 cm. in its front side, which adopts a certain curvature in the shape of a flexible tube that can be widened and adjusted according to the pressure put when the banana is manually positioned within the device, allowing its straightening by pressing with the finger.

The upper section of such device forming the supporting head of the parallels presents internally a cylindrical/conical annular ribbed cavity that permits centralising in a safe and fast way the banana base end, since the abovementioned parallels are curved this allows sliding the fruit without damaging it, the tubular rod that is introduced into the fruit once it is straightened has in its lower section a cut in the shape of a hook or small flag that once it is introduced, it rotates and inserts the cylindrical internal pulp of the fruit and removes it totally without having to eject the air.

### BRIEF DESCRIPTION OF THE DRAWINGS

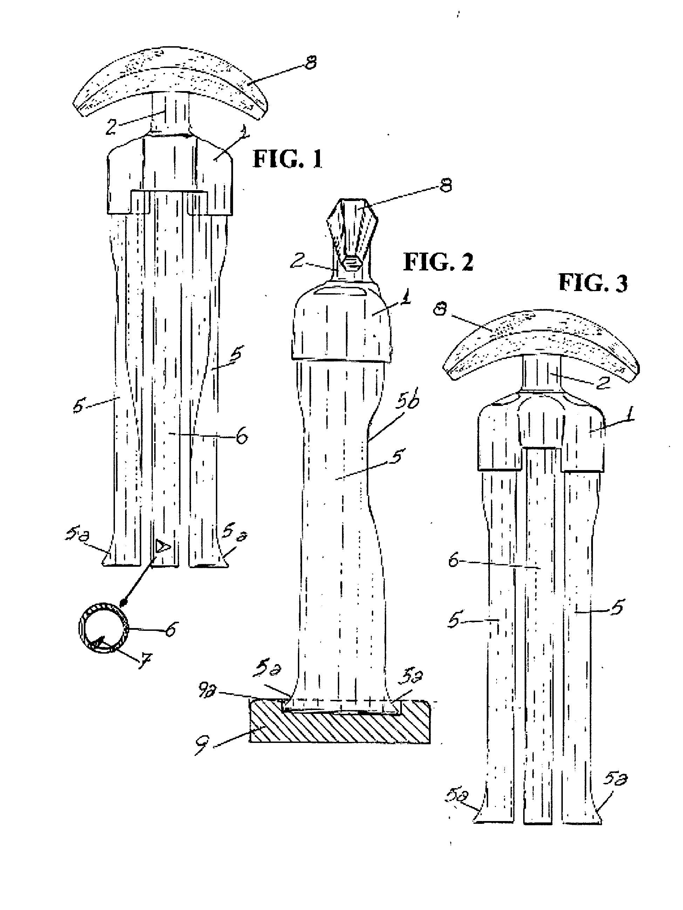

Figure 1 is a front elevation view of said device, illustrating a cross section of a lower section of the tubular rod;
Figure 2 is a side elevation view of the device adapted in a part of longitudinal support;
Figure 3 is a rear elevation view of the device;
Figures 4 and 5 are respective views of partial cross sections in two operational positions of the drilling of said banana;
Figure 6 is a partial cross section which illustrates the obstruction of the upper opening of the tubular rod for the removal of the remainder pulp placed in the interior of such tubular rod;
Figure 7 is a view of a partial cross section of such rod to which a part is added in order to allow the removal of such remainder pulp for its subsequent use;
Figure 8 is an upper perspective view of such device.

### DESCRIPTION OF THE PREFERRED EMBODIMENT OF THE UTILITY MODEL

According to what is represented by the figures in the drawings, this utility model offers a device for the longitudinal drilling of a banana fruit -A-comprising a header -1- , of irregular cylindrical cross section, which has in its upper section an inclined annular surface that converge in a cylindrical position -2- with a verticalised cylindrical perforation -3-, passing through the abovementioned header -1- and joining to a cylindrical/conical cavity -4-, annularly ribbed, projecting out from the lower base of the abovementioned header -1- respective arms -5- , of arched cross section, whose lower ends -5a-widen outwards, presenting said arms -5-, in longitudinal edges, arched sections -5b- to facilitate through the pressure of the introduction and alignment of the banana, being placed in such perforation -3- and in a freely movable way, a tubular rod -6- that has in its annular wall and adjacent to the lower end a carved horizontal V that defines interiorly a triangular tab -7- and its upper end an arched part -8- of hexagonal cross section and vertically perforated, such device being supplemented with a base part -9- that in its internal face presents according to the diametrical plane each arched groove -9a-concentrically displayed in connection with a cylindrical cavity -9b- that allows the insertion of the arched edges -5a- and of the lower end of the tubular rod - 6- that has a spindle-shaped edge, and a rod -10- with an end cap -10a- for the elimination of the product to be removed from the banana -A-.

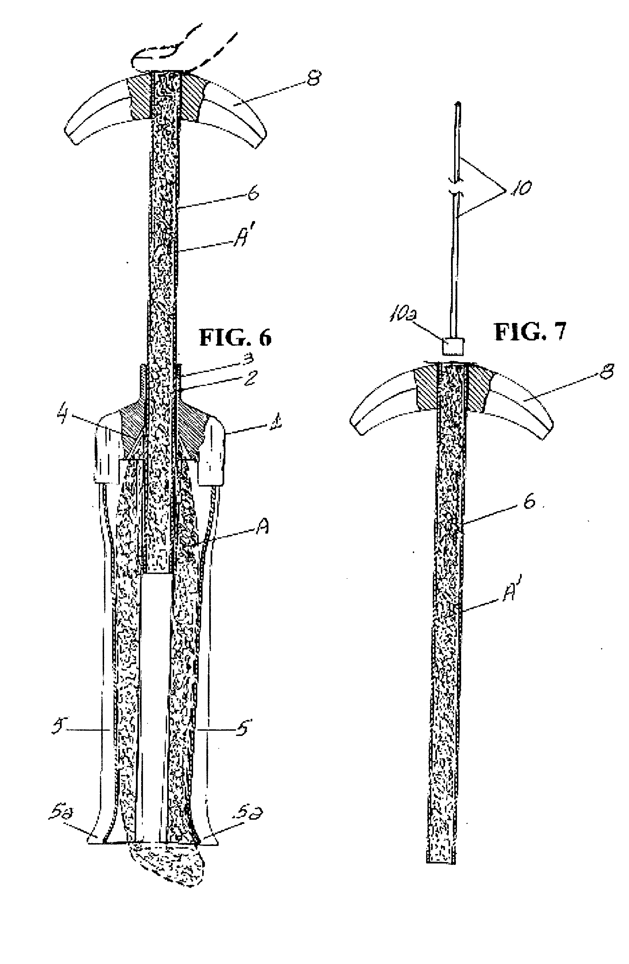

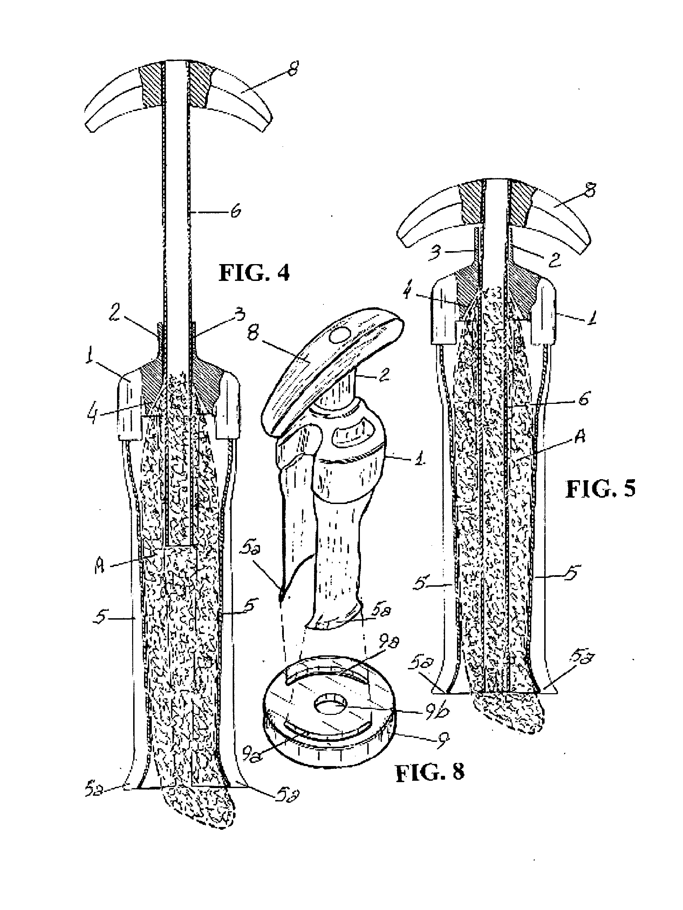

In figures 4 to 6, the device object of this utility model is illustrated in three operational stages, in which the remainder A' of banana A is removed in the rod -6-.

## Claims

1. A device for the longitudinal perforation of a banana fruit for its subsequent filling, CHARACTERIZED because it comprises a part as a header from whose upper face a cylindrical part is projected, such header being vertically perforated by a cylindrical upper part and a lower cylindrical/conical part, and from the internal face of such header and from diametrically opposite areas respective arms in parallel in longitudinal laterally opposite edges arched sections extend defining such perforation a connection for a tubular rod with a spindle-shaped edge and an inner wing, which is fixed to a perforated part and arched so as to form a handle, having each arm part of the device in their lower ends surfaces arched outwards that define means for fitting in and support in a pair of arched diametrically opposite grooves in a cylindrical part forming the base and concentric to a central blind cylindrical cavity.
